Europäisches Patentamt

European Patent Office

Office européen des brevets

(19)

(11) Veröffentlichungsnummer: **0 008 326**
**A2**

(12) # EUROPÄISCHE PATENTANMELDUNG

(21) Anmeldenummer: 79101950.8

(22) Anmeldetag: 15.06.79

(51) Int. Cl.³: **F 16 B 4/00**
**B 23 P 11/02**

(30) Priorität: 19.08.78 DE 2836334

(43) Veröffentlichungstag der Anmeldung:
05.03.80 Patentblatt 80/5

(84) Benannte Vertragsstaaten:
BE FR GB IT NL

(71) Anmelder: **Mannesmann Demag AG**
**Wolfgang-Reuter-Platz**
**D-4100 Duisburg(DE)**

(72) Erfinder: **Boddenberg, Klaus, Dr.-Ing.**
**Friemersheimer Strasse 42**
**D-4100 Duisberg 46(DE)**

(72) Erfinder: **Waldmann, Jürgen, Dr.-chem.**
**Steiermarkstrasse 47**
**D-4100 Duisburg 28(DE)**

(72) Erfinder: **Demmer, Manfred, Ing.-grad**
**Straubinger Strasse 24**
**D-4100 Duisburg 1(DE)**

(74) Vertreter: **Beil, Otto G. Dipl.-Ing.**
**Mannesmann AG Mannesmannufer 2**
**D-4000 Düsseldorf(DE)**

(54) **Verfahren zum Schützen von metallenen, kraftschlüssig gepaarten, schwingend belasteten Maschinenteilen vor Reibkorrosion.**

(57) Zum Schützen von metallenen, kraftschlüssig gepaarten, schwingend belasteten Maschinenteilen (insbesondere gleicher Beschaffenheit) vor Reibkorrosion werden zwischen den gepaarten Flächen

a) Verbindungsteile (z. B. Paßfelder) mit einer unterschiedlichen Kristallstruktur und/oder größeren Härte als die der zu fügenden Teile angeordnet oder

(b) mindestens an einer Fläche der gepaarten Flächen eine 5 bis 50 Micron, vorzugsweise 20 Micron, dicke Schicht aus chemisch abgeschiedenem Nickel für zu fügende, aus einer Bronze bestehende Maschinenteile angebracht oder

(c) mindestens an einer Fläche der gepaarten Flächen eine Schicht aus Wasserglas für zu fügende, aus einer Bronze bestehende Maschinenteile angebracht.

EP 0 008 326 A2

DEMAG Aktiengesellschaft
Wolfgang-Reuter-Platz
4100 Duisburg

16. August 1978
15891 - C /Un.

Verfahren zum Schützen von metallenen, kraftschlüssig
gepaarten, schwingend belasteten Maschinenteilen vor
Reibkorrosion

Die Erfindung betrifft ein Verfahren zum Schützen von metallenen, kraftschlüssig gepaarten, schwingend belasteten Maschinenteilen, insbesondere Maschinenteilen gleicher Beschaffenheit, wobei ein direkter Kontakt zwischen den Fügeflächen
vermieden wird, indem zwischen den gepaarten Flächen mindestens
an einer Fläche eine Materialschicht mit anderer Beschaffenheit
als die Beschaffenheit der Maschinenteile ist, angebracht wird
oder indem zwischen den gepaarten Flächen Verbindungselemente
angebracht werden.

Bei metallenen, kraftschlüssig gepaarten Maschinenteilen, wie
z.B. Dichtungseinsätzen zwischen dem Rotor und Stator eines
Turboverdichters, treten gelegentlich bereits bei Beanspruchungen weit unterhalb der Dauerfestigkeit Dauerbrüche auf,
die von Oberflächenbereichen mit Reibkorrosionsschäden ausgehen. Die Ursache dafür ist eine komplexe Oberflächenbeanspruchung, die mit "Reibdauerbeanspruchung" bezeichnet wird.
Diese Reibdauerbeanspruchung setzt sich zusammen aus einer
Flächenpressung und einer wechselnden Schubspannung infolge
kleinster Scheuerbewegungen (Schlupf) der gepaarten Oberflächen. Die dabei auftretenden Schubspannungen sind unerwartet hoch.

Die Reibdauerbeanspruchung kann auf zweifache Art das Maschinenteil schädigen. Zum einen kann "Reibkorrosion" als Oberflächenschaden entstehen, zum anderen erfolgt eine Minderung
der Dauerhaltbarkeit von schwingend belasteten Maschinenteilen.

Der Reibkorrosionsschaden läßt Rückschlüsse auf die Reib-dauerbeanspruchung zu. Überschreitet nämlich die Reibdauer-beanspruchung die Festigkeit des Werkstoffes, so entstehen Mikro-Anrisse in der Oberfläche. Dabei können aus der Oberfläche tribochemisch aktivierte Partikel austreten, die mit dem Sauerstoff der Umgebungsluft oder Sauerstoff als Arbeitsmedium, z.B. bei Sauerstoff-Verdichtern, spontan reagieren. Die so entstandenen oxidischen Abriebprodukte führten zu der Bezeichnung Reibkorrosion.

Über das Ausmaß der Oberflächenzerstörung kann folgende Feststellung getroffen werden:

- der Grenzflächenverschleiß steigt mit der Anzahl der Reibschwingungen,

- der Grenzflächenverschleiß steigt mit zunehmender Flächenpressung,

- der Ausgangszustand der Grenzfläche beeinflußt das Ausmaß der Zerstörung praktisch nicht,

- Schmiermittel haben nur einen geringen Einfluß auf die Verminderung von Reibkorrosionsschäden.

Wird ein schwingend belastetes Maschinenteil zusätzlich einer Reibdauerbeanspruchung an der Oberfläche unterworfen, so tritt eine Minderung der Dauerhaltbarkeit ein. Für den Bruch eines schwingend belasteten Bauteiles, welcher von einer solchen reibdauerbeanspruchten Oberfläche ausgeht, wird in der Praxis die Bezeichnung "Reibdauerbruch" benutzt.

Der Reibdauerbruch ist durch oxidische Abriebprodukte und durch eine "Nase" am Ausgangspunkt des Bruches sicher von anderen Dauerbrüchen zu unterscheiden.

BAD ORIGINAL

. . . . .

Als "Reibdauerhaltbarkeit" wird diejenige größte schwingende Beanspruchung im Bauteil bezeichnet, bei der noch kein Reibdauerbruch auftritt.

Die Gefahr von Reibdauerbrüchen ist an schwingend belasteten Maschinenteilen oder Baugruppen immer dann gegeben, wenn diese so gestaltet sind, daß bei Belastung schwingende Relativverschiebungen (Schlupf) der gepaarten Oberfläche möglich werden. So treten Reibdauerbrüche u.a. auch sehr häufig an Dichtungseinsätzen für Rotoren von Turbokompressoren auf.

Zur Vermeidung der Brüche wurden bereits verschiedene Schritte empfohlen (Forschungshefte-Forschungskuratorium Maschinenbau e.V., Heft 56, 1976: "Reibkorrosion - Abschlußbericht"), wie zum Beispiel

- Vermeidung von kraftschlüssig gepaarten Fügeflächen, z.B. durch Schweiß-, Löt- oder Klebeverbindungen anstelle von Schrumpf- und Spannverbindung,

- Verminderung der Reibdauerbeanspruchung durch verschiedene Maßnahmen, z.B. durch möglichst geringe Dehnungsunterschiede der gefügten Teile oder durch Trennung der Reibdauerbeanspruchung und der Bauteilbeanspruchung durch Entlastungskerben an den Verbindungselementen, die die gefügten Teile verbinden (z.B. axiale und tangentiale Entlastungskerben in Paßschrauben für Flanschkupplungen).

Zahlreiche Versuche wurden auch mit Werkstoffpaarungen mit großer Oberflächenfestigkeit (die z.B. durch Oberflächenhärtung oder -verfestigung erreicht wird) durchgeführt.

Bei verschiedenen, aus mehreren zusammengefügten Bestandteilen bestehenden Maschinenteilen, wie z.B. bei Dichtungseinsätzen zwischen Rotor und Stator eines Turboverdichters, die im wesentlichen aus Bronze bestehen, ist es nicht möglich, diese Teile unlösbar zu verbinden. Ebenso können
hier Paßteile mit Entlastungskerben nicht sinnvoll angewendet werden, insbesondere wegen starker Minderung der
Dauerhaltbarkeit. Auch andere bekannte Maßnahmen zum Schützen
vor Reibkorrosion können nicht sinnvoll angewandt werden.

Aufgabe der Erfindung ist es, ein Verfahren der eingangs
genannten Art zu finden, durch das die Lebensdauer von
kraftschlüssig gepaarten Maschinenteilen, insbesondere
solchen, die sich aus mehreren, miteinander nicht unlösbar
zu verbindenden Bestandteilen zusammensetzen, wesentlich
verlängert und die Reibkorrosion an diesen Teilen vermindert wird. Diese Aufgabe wird erfindungsgemäß durch die
Merkmale des kennzeichnenden Teiles des Patentanspruchs 1
oder 3 oder 4 oder 5 gelöst. Eine vorteilhafte Weiterbildung
der Erfindung ist im Unteranspruch 2 enthalten.

Die durchgeführten Versuche zeigten, daß außer anderen Einflüssen, wie z.B. Schlupf, Flächenpressung, Oberflächen-
und Wärmebehandlung, Umgebungsatmosphäre und Reibgeschwindigkeit auch der Einfluß der Kristallstruktur von erheblicher Bedeutung ist. Je gleichartiger die Kristallstruktur
der Reibpartner, desto größer ist die Neigung zur gegenseitigen Verschweißung und zur Reiboxidation.

Eine weitere zu beachtende Rolle spielt die Härte des Materials, aus dem die Reibpartner bestehen.

Es hat sich ferner gezeigt, daß auch durch Anbringung einer
Schicht von Wasserglas auf die einander zugewandten Flächen
von aus einer Bronze bestehenden gepaarten Rotor-Dichtungssätzen für Sauerstoff-Turbokompressoren die Reibkorrosion

.....

15891 – C /Un. 　　　　 - 5 - 　　　　 16. 8. 1978

erheblich vermindert wurde. Die gleiche Wirkung wird erzielt, wenn man die jeweils aus zwei Halbringen bestehenden
Dichtungseinsätze aus einer Bronze mit einer Paßfeder aus
CrNi-Stahl verbindet.

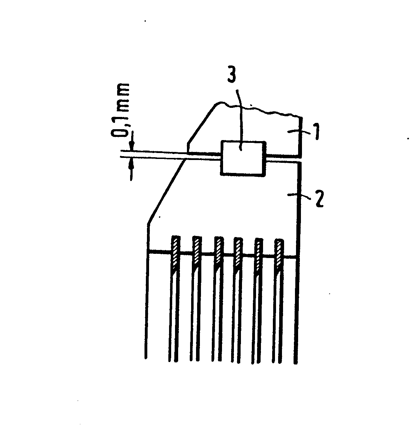

Ein Ausführungsbeispiel einer erfindungsgemäßen Verbindung
ist in der Zeichnung dargestellt.

Mit 1 und 2 sind die Halbringe eines Dichtungssatzes für
Sauerstoff-Kompressoren bezeichnet. Die Teile bestehen aus
einer Kupfer-Nickel-Bronze.

Zwischen den metallenen Oberflächen ist ein Spalt von 0,1
bis 0,15 mm vorgesehen. Die Teile 1 und 2 sind mit Hilfe
einer Paßfeder 3 verbunden, die aus einem Chrom-Nickel-Stahl
besteht.

## Patentansprüche

1. Verfahren zum Schützen von metallenen, kraftschlüssig gepaarten, schwingend belasteten Maschinenteilen, insbesondere Maschinenteilen gleicher Beschaffenheit, vor Reibkorrosion, wobei ein direkter Kontakt zwischen den Fügeflächen vermieden wird, indem zwischen den gepaarten Flächen mindestens an einer Fläche eine Materialschicht mit anderer Beschaffenheit als die Beschaffenheit der Maschinenteile ist, angebracht wird oder zwischen den gepaarten Flächen Verbindungselemente angeordnet werden, gekennzeichnet durch die Verwendung eines Verbindungsteiles mit einer unterschiedlichen Kristallstruktur und/ oder größeren Härte als die der zu fügenden Teile.

2. Verfahren nach Anspruch 1, dadurch gekennzeichnet, daß das Verbindungsteil für die zu fügenden, aus einer Bronze bestehenden Maschinenteile eine aus CrNi-Stahl bestehende Paßfeder ist.

3. Verfahren zum Schützen von metallenen, kraftschlüssig gepaarten, schwingend belasteten Maschinenteilen, insbesondere Maschinenteilen gleicher Beschaffenheit, vor Reibkorrosion, wobei ein direkter Kontakt zwischen den Fügeflächen vermieden wird, indem zwischen den gepaarten Flächen mindestens an einer Fläche eine Materialschicht mit anderer Beschaffenheit, als die Beschaffenheit der Maschinenteile ist, angebracht wird oder zwischen den gepaarten Flächen Verbindungselemente angeordnet werden, gekennzeichnet durch Verwendung einer 5 bis 50 My,
vorzugsweise 20 My, dicken Schicht aus chemisch abgeschiedenem Nickel für zu fügende, aus einer Bronze
bestehende Maschinenteile.

4.   Verfahren zum Schützen von metallenen, kraftschlüssig
gepaarten, schwingend belasteten Maschinenteilen,
insbesondere Maschinenteilen gleicher Beschaffenheit,
vor Reibkorrosion, wobei ein direkter Kontakt zwischen
den Fügeflächen vermieden wird, indem zwischen den gepaarten Flächen mindestens an einer Fläche eine Materialschicht mit anderer Beschaffenheit, als die Beschaffenheit der Maschinenteile ist, angebracht wird oder zwischen den gepaarten Flächen Verbindungselemente angeordnet werden,
gekennzeichnet durch Verwendung einer Schicht aus Wasserglas für zu fügende, aus einer Bronze bestehenden
Maschinenteile.